Europäisches Patentamt

European Patent Office

Office européen des brevets

(11) Veröffentlichungsnummer : **0 447 574 A1**

# (12) EUROPÄISCHE PATENTANMELDUNG

(21) Anmeldenummer : 90105062.5

(22) Anmeldetag : 17.03.90

(51) Int. Cl.$^5$ : **B61D 47/00, B60S 9/14**

Ein Antrag gemäss Regel 88 EPÜ auf Berichtigung von Anspruch 1 liegt vor. Über diesen Antrag wird im Laufe des Verfahrens vor der Prüfungsabteilung eine Entscheidung getroffen werden (Richtlinien für die Prüfung im EPA, A-V, 2.2).

(43) Veröffentlichungstag der Anmeldung :
25.09.91 Patentblatt 91/39

(84) Benannte Vertragsstaaten :
AT BE CH DE FR LI NL

(71) Anmelder : **Leitz, Ludwig, Dr.**
**Laufdorfer Weg 33**
**W-6330 Wetzlar (DE)**

(72) Erfinder : **Leitz, Ludwig, Dr.**
**Laufdorfer Weg 33**
**W-6330 Wetzlar (DE)**

(74) Vertreter : **Riecke, Manfred**
**Neuköllner Strasse 8**
**W-6333 Braunfels (DE)**

(54) **Einrichtung für ein Kombinationssystem des Strassen-Individual-Transportes und des schienengebundenen Zugtransportes.**

(57) Es wird eine Einrichtung für ein Kombinationssystem des Straßen-Individualtransportes und des schienengebundenen Zugtransportes beschrieben, bei dem mit eigenen Mitteln ein Überwechseln des Straßenfahrzeuges von einer Transportart zur anderen in einem kombinierten Transportsystem möglich ist. Das Kombinationssystem umfaßt als System-Einheiten einen Bahn-Niederflurwagen, eine mit dem Niederflurwagen niveaugleiche Rampe sowie Sattelschlepper-Auflieger (2), die eine stets verfügbare Querrolleinrichtung (24, 25) mit sich führen und nach dem Querrollen allein auf dem Niederflurwagen transportiert werden. Die Einrichtung zeichnet sich dadurch aus, daß der Auflieger (2) mit mindestens einer stets mitgeführten Baueinheit versehen ist, welche die drei Elemente in sich vereinigt : eine Querrolleinrichtung (24, 25), Teleskopbodenstützen (28, 280) und Blockiereinrichtungen (38, 038). Am Auflieger (2) können zwei Querrolleinrichtung (24, 25) vorgesehen sein, es kann aber auch nur hinten eine solche Einrichtung vorgesehen sein, während vorne die Last von einer Stütze übernommen wird. Diese Stützen sind Teleskopstütze (28), die durch zusätzliche Knickstreben (280a, 280b, 291, 292) abgestützt sind und den Auflieger (2) auf dem Niederflurwagen sowohl in Fahrtrichtung als auch quer dazu sicher abstützen. Für den Niederflurwagen wird eine Aufstellfläche aus einem Gitterrost (04) vorgeschlagen, in dessen Löcher die Blockiereinrichtungen (38, 038) mittels an ihnen ausgebildeten Zapfen eingreifen und unter Federkraft in der Blockierstellung gehalten werden.

Fig. 6

EP 0 447 574 A1

# EINRICHTUNG FÜR EIN KOMBINATIONSSYSTEM DES STRAßEN-INDIVIDUALTRANSPORTES UND DES SCHIENENGEBUNDENEN ZUGTRANSPORTES

Die Erfindung betrifft eine Einrichtung für ein Kombinations system des Straßen-Individualtransportes und des schienenge-bundenen Zugtransportes, bei der als Transporteinheiten des Individualverkehrs Sattelschlepper Verwendung finden.

Aus der DE-PS 37 39 277 ist ein Verfahren zum Überwechseln von Straßenfahrzeugen von der Straße auf einen Zug bzw. umgekehrt sowie eine Einrichtung zur Durchführung des Verfahrens bekannt, bei dem ein niveaugleiches Überführen von einer ebenen Straßenrampe zu einem Niederflurwagen mit völlig planer Aufstellfläche erfolgt und sich alle sonstigen notwendigen bahnseitigen Vorkehrungen, z.B. für das Festmachen von Sattelschlepper-Aufliegern und PKW, unterhalb dieser Aufstellebene befinden und so eine benutzerseitig freie und breite Verwendbarkeit gegeben ist, einerseits für den Schwerlastverkehr mit dem rationellsten Individual-Lastverkehrsmittel, dem 3-achsigen Sattelschlepper und andererseits für den Personenverkehr mit PKW und auch - wie sich inzwischen herausgestellt hat - in Kombination von PKW und Wohnanhänger. Für letztere Aufgabe gibt es z.Zt. überhaupt kein Angebot, obwohl die Wohnanhänger den Verkehr auf den Autobahnen sehr belasten und die Eigentümer eine Bahnbenutzung begrüßen würden. Es ist besonders sinnvoll sowohl für die Straßenbenutzer als auch für die Bahn, wenn diese Transporte an Sonn- und Feiertagen vorgenommen werden, wenn der Berufsverkehr ruht. Das gilt auch für die Ferienzeiten, in denen viele Betriebe schließen, während der Wohnwagenanhängerverkehr ansteigt.

In der DE-PS 37 39 277 ist für die Fahrer und ihre Fahrzeuge vorgesehen, daß sie alle Mittel sowohl zum Überwechseln als auch zum Festmachen auf den Bahn-Niederflurwagen selbstverantwortlich und stets verfügbar mit führen, um so eine personalkostensparende schnelle, komplette Selbstbedienung und Selbstverantwortung sicherzustellen. Dieser Weg ist bisher nicht in voller Konsequenz gegangen worden, wie es für ein wirtschaftliches Gesamtsystem notwendig ist.

Entweder ist die Relation zwischen Nutzlastleistung zu Fahrer personalkosten nicht optimiert oder es werden seitens der Bahn zu viele pflegebedürftige Spezialvorrichtungen an den Schienenfahrzeugen und, was besonders nachteilig ist, in den Stationsanlagen benötigt. Denn die Frequentierung einer Station bleibt bei Nutzung für einen freien Individualverkehr immer eine Unbekannte, und die Auslegung der Zahl der Vorrichtungen, die bereitgehalten werden sollten kann nie rationell vorgesehen werden. Dies gilt für feste Vorrichtungen und für bewegliche. Für letztere geben bezüglich mangelhafter Verfügbarkeit die Gepäcktransportwägelchen an Bahnsteigne und Flughäfen jedem Reisenden bekannte Negativbeispiele.

In der DE-PS 14 55 317 ist dieser Mangel von Anlagen auf den Stationen erkannt und angesprochen worden, aber diese Lösung kann nur am 2-Achs-Sattelschlepper Anwendung finden, der nicht die günstigste Relation von Nutzlast-Kapazität pro Fahrer hat und sich zahlenmäßig deshalb nicht durchgesetzt hat, und außerdem ist diese Lösung nicht brauchbar für die bereits angesprochene anderweitige Verwendung der Niederflurwagen, wie für Personenwagen Verkehr an Sonn- und Feiertagen sowie zum Ferienbeginn als wichtige Straßenentlastung und gleichzeitig bessere Kapazitätsnutzung des rollenden Schienenmaterials.

Daß der in der DE-PS 37 39 277 vorgeschlagene Weg nicht konsequent für Schwerlastverkehr mit Sattelschleppern angegangen wurde, ist vermutlich auf das Vorurteil zurückzuführen, daß für diese Fahrzeuge keine räumlich und gewichtsmäßig befriedigende Lösung angeboten werden konnte.

Der erfindung liegt die Aufgabe zugrunde, im Anschluß an die DE-PS 37 39 277 eine Einrichtung anzugeben, bei welcher die Relation zwischen Personalkosten und Nutzlastbeförderungsleistung optimiert ist, und so das in diesem Abschnitt angesprochene Vorurteil zu widerlegen.

Diese Aufgabe ist durch eine Einrichtung gelöst, welche die im Anspruch 1 angegebenen Merkmale aufweist. Es werden mehrere im Detail überlegte und realisierbare Varianten (Ausführungsformen) beschrieben. Sie haben alle ihre Eigen-Berechtigung, wenn man nicht an eine sehr universelle Anwendung denkt, wie noch beschrieben werden wird.

Beim kombinierten Selbstmitführen aller erforderlichen Querrolleinrichtungen, Abstützeinrichtungen und stellungskorrigierenden Blockiereinrichtungen ist eine gewisse Vergrößerung des Leergewichtes unvermeidbar. Dafür können neben dem Querrollen auf den Bahn-Niederflurwagen bei der universellsten Ausführung folgende Manöver prompt ausgeführt werden:

1. Einparken auf Straßen.
2. Zusammenrücken auf engstem Raum in Garagen.
3. Seitliches dichtes Heranbewegen an Rampen zwecks seitlichem Beladen aund Ausladen.
4. Bewegungsmanöver auf Baustellen.
5. Zusammenrücken der Auflieger auf Schiffsfähren, wie sie z.Zt. für den Verkehr von Finnland oder Skandinavien über die Ostsee zur Bundesrepublik eingesetzt werden. Gerade dieses ist eine wichtige, z.Zt.

unbefriedigend gelöste Aufgabe. Die Sattelschlepper werden nebeneinander auf dem genässten Deck aufgefahren mit Lücken, die das Aus- und Einsteigen der Fahrer und das Abkuppeln und Wegfahren der Zugmaschinen erlauben, und dann werden ohne Anheben des Aufliegers diese mittels Gabelstaplern mit Druck seitlich zusammengeschoben, wodurch es häufig zu Beschädigungen der Reifen kommt. Mittels auf Deck verfügbarer Stromanschlüsse z.B. kann dieses Manöver besser, schneller und beschädigungs frei durchgeführt werden und zudem personalsparender.

6. Zum Reifenwechseln haben die Sattelschlepper-Auflieger neben den vorderen Stützen noch weitere ausfahrbare Wagenheber bzw. Teleskopstützen, um das Fahrzeug auch hinten anzuheben oder zu stützen. Erfindungsgemäß werden diese Einrichtungen in die Querrolleinrichtungen integriert und damit bei allen nachfolgend vorgeschlagenen Ausführungsformen eingesetzt.

7. Der Übergang von einer Schienenspur zur anderen kann allein mit elektrischen Anschlüssen - allerdings mit Hilfsper- sonal in diesem Fall - erfolgen.

Eine der dringlichsten und hochaktuellsten Aufgaben ist die Passage der Alpenpässe auf der Schiene, insbesondere für den Schwerlastverkehr. Für diese Aufgabe kann eine die Zusatzgewichte minimierende Sonderausführung durchaus Sinn haben, die nicht alle beschriebenen Punkte erfüllt, aber doch nicht auf wenige Speditionen und deren Spezialfahrzeuge zugeschnitten sein müßte, wie es sich zwangsläufig aus Lösungen ergibt, die eng spezialisierte Vorrichtungen sowohl für Schienenfahrzeuge als auch für die Straßenfahrzeuge verlangen, wie sie in den US-PS 2 691 450; 3 576 167; 3 102 646 und 2 121 181 beschrieben sind. Denn bei dieser Aufgabe ist mit sehr vielen Kleinunternehmern zu rechnen. Siehe hierzu auch VDI-Nachrichten Nr.7 v. 17.2.1989, S. 25.

Der Schwerpunkt bei der Kombination des Straßen-Individual-transportes mit dem schienengebundenen Zugtransport, und demzufolge auch bei der erfindungsgemäßen Einrichtung, liegt bei dem Schwerlastverkehr mit Sattelschleppern mit 3-Achs-Aufliegern, ohne dabei die für die ökonomie des Verfahrens entscheidende anderweitige Nutzbarkeit der stationären und beweglichen Bahnanlagen, wie schon behandelt, zu vernachlässigen bzw. zu beeinträchtigen.

In der Zeichnung ist die Erfindung in mehreren Ausführungsbeispielen dargestellt. Es zeigen:

Fig. 1        die vordere Querrolleinrichtung mit Zwillingsreifen in Seitenansicht,
Fig. 2        die vordere Querrolleinrichtung in Draufsicht, geschnitten,
Fig. 3.1      die Querrolleinrichtung in abgesenktem Zustand,
Fig. 3.2      die Querrolleinrichtung in angehobenem Zustand,
Fig. 4.1      den Hauptstahlträger der Querrolleinrichtung als Einzelteil,
Fig. 4.2      einen Schnitt durch Fig. 4.1 in Höhe IV-IV,
Fig. 5        die hintere Querrolleinrichtung mit Einzelreifen in Draufsicht,
Fig. 6        einen 3-Achs-Auflieger mit angehobener vorderer und hinterer Querrolleinrichtung,
Fig. 7        die ein- und ausschwenkbare Unterbringung eines Reserverades am Auflieger, wie aus Fig.6 ersichtlich,
Fig. 8        eine von insgesamt vier gleichen Blockiereinrich tungen,
Fig. 9        den Grundriß der Lagerung der Teleskop-Stützbeine
Fig. 10       einen Schnitt durch Fig.9 in Höhe X-X,
Fig. 11       einen Sattelschlepper mit Zugmaschine und Auflieger in 90°-Stellung mit nur einer Querrolleinrichtung am hinteren Ende,

Fig. 12.1⎫ den Gitterrost eines Niederflurwagens
Fig. 12.2⎭ in vergrößerter Darstellung,

Fig. 13    einen Niederflurwagen mit Gitterrost,
Fig. 14    eine Querrolleinrichtung mit kombinierter Luftbereifung und Stahlwalzen in Draufsicht,
Fig. 15    die Querrolleinrichtung der Fig.14 in Ansicht,
Fig. 16    ein Einzelteil (Klammer einer Klemmvorrichtung) einer Blockiereinrichtung in Draufsicht,

Fig. 17.1⎫ eine Blockiereinrichtung in drei verschiedenen
Fig. 17.2⎬ Funktionsstellungen in Aufriß-Schnitten,
Fig. 17.3⎭

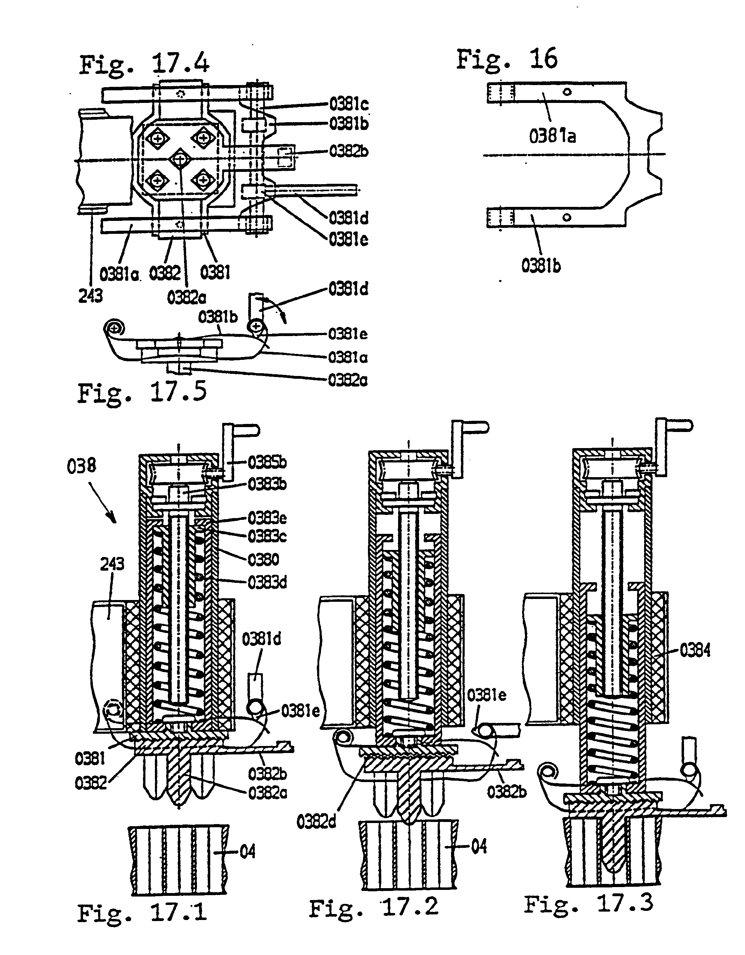

Fig. 17.4    eine Ansicht der Blockiereinrichtung von unten,

3

Fig. 17.5    eine Seitenansicht der Klemmvorrichtung,

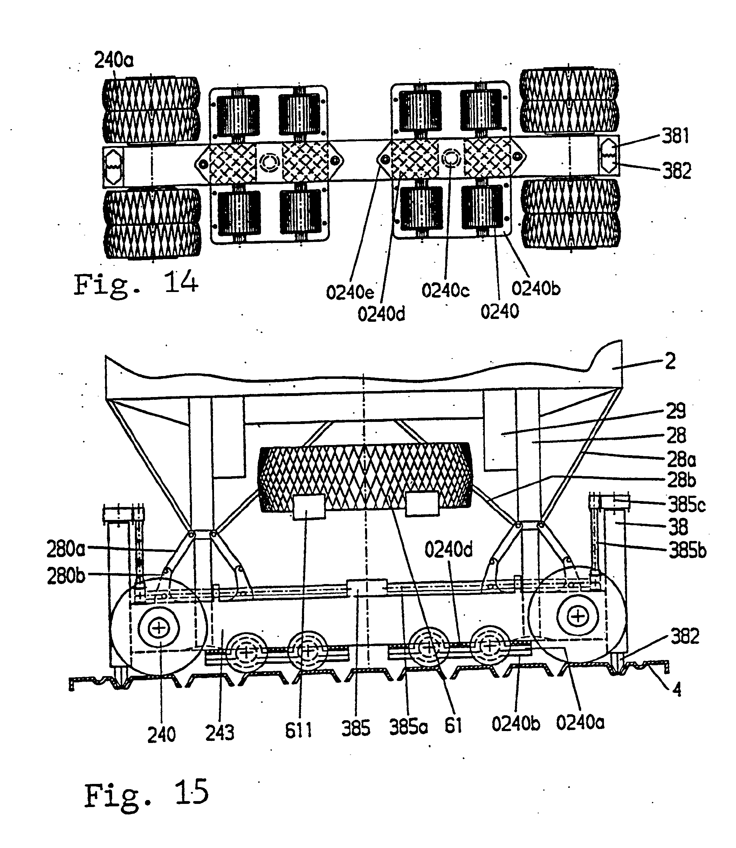

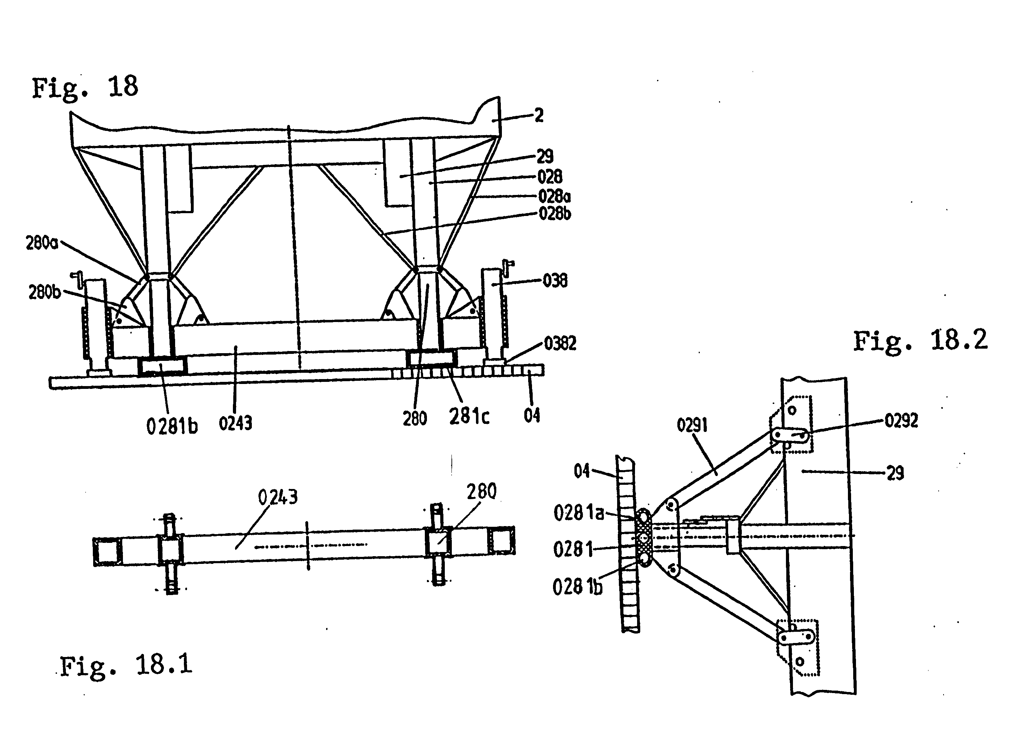

Fig. 18    eine Abstützeinrichtung leichterer Bauart für eine kombinierte Luftbereifung/Stahlwalzen-Querroll einrichtung gemäß Fig.14,

Fig. 18.1    den Längsträger der Abstützeinrichtung gemäß Fig.18 in Draufsicht,

Fig. 18.2    die Abstützeinrichtung gemäß Fig.18 in abgesenkter Stellung,

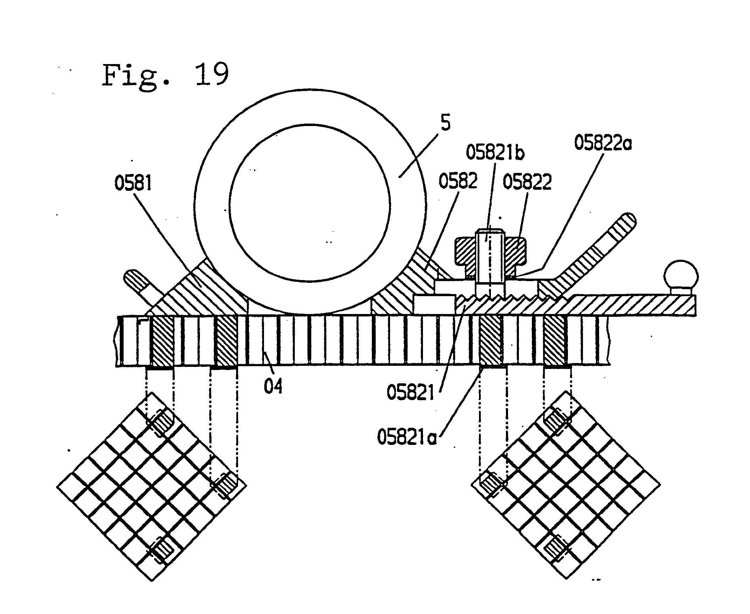

Fig. 19    eine Blockiereinrichtung mit Hemmschuh in einer dem Gitterrost des Niederflurwagens angepaßten Ausführungsform.

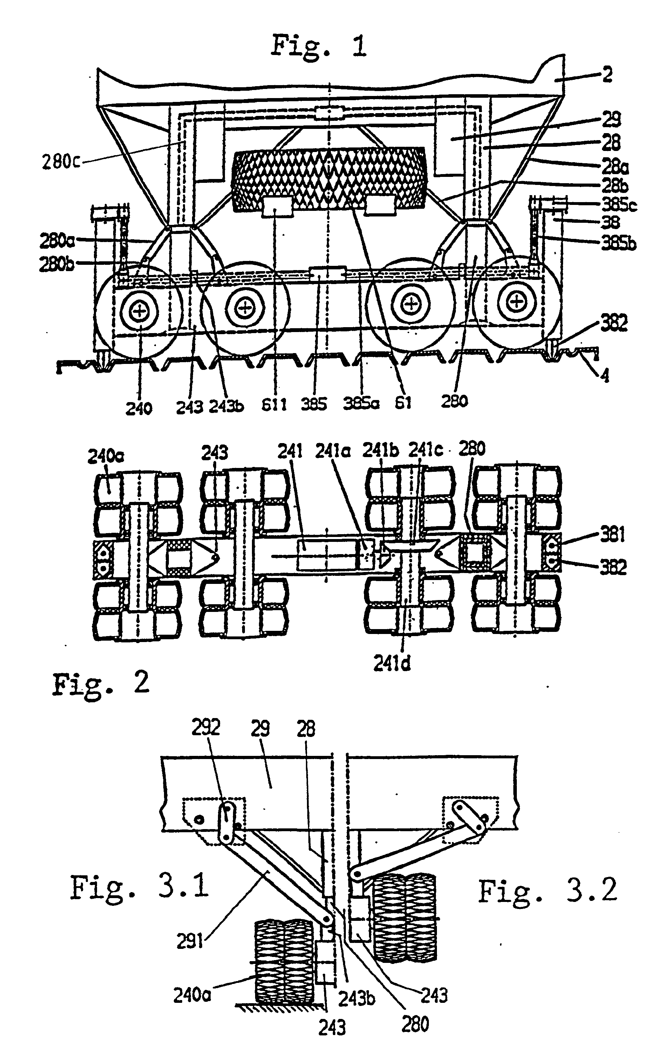

Das Ausführungsbeispiel gemäß den Fig.1-9 benutzt für alle Querrollachsen Luftreifen, um eine gute Geländeanpassung ohne einen erheblichen Aufwand an Stahlfederung zu benötigen. Bei dem Ausführungsbeispiel gemäß den Fig.14-15 erhalten nur die Achsen an den Enden der Querrolleinrichtung Luftbereifung, um vor allen Dingen den Übergang von den Rampen zum Bahnniederflurwagen problemlos zu machen, während an den mittleren Achsen kleine Rollen bzw. Walzen Verwendung finden, wie sie für die Bewegungshilfen von schweren Maschinen auf Betonböden benutzt werden, um so Gewicht zu sparen für Aufgaben, bei denen mit planierten Böden gerechnet werden kann.

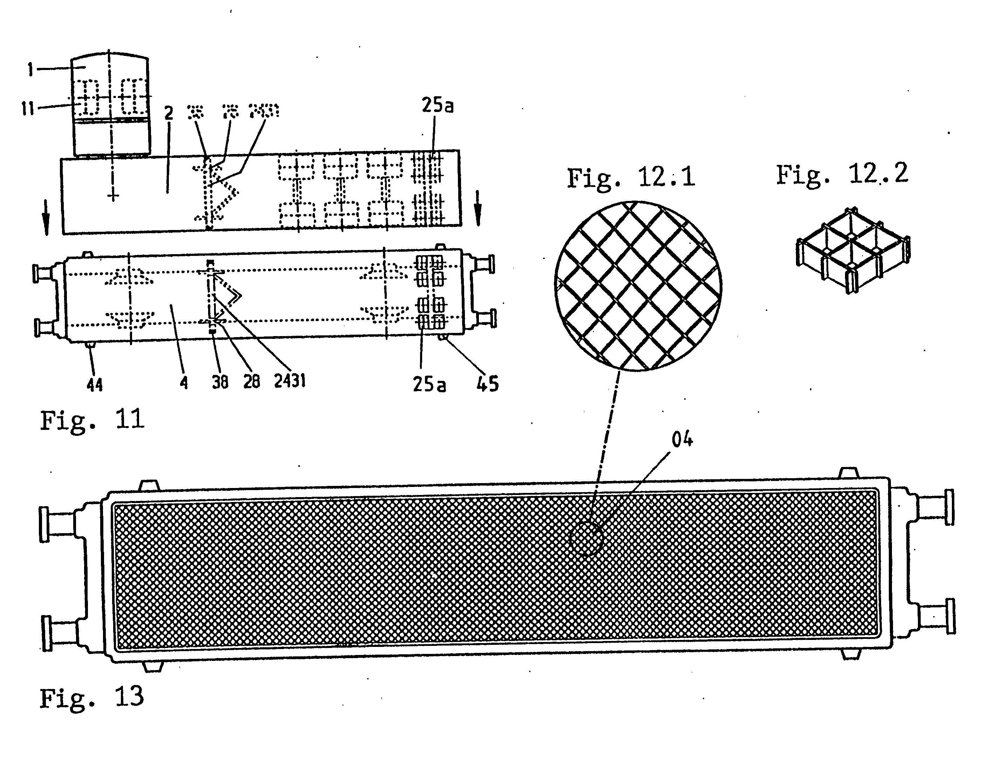

Eine für die Frage der mitgeführten Gewichte besonders günstige Lösung ergibt die Ausführungsform, die in Fig.11 in Draufsicht dargestellt ist, da sie nur eine zusätzliche Querrollein richtung am hinteren Ende benötigt und eine etwas stabiler ausgeführte vordere Abstütz- und Blockiereinrichtung, da hierbei die Zugmaschine selber, wie bereits in der DE-PS 37 39 277 beschrieben, das Querrollen beim Andockmanöver übernimmt. Diese Ausführung ist sehr interessant für alle festlandbezogenen Straßen/Schienen-Übergänge, insbesondere das problem Alpenübergang. Ungünstiger ist diese Lösung für Schienen-Spurweiten-Wechsel und das Schiffsfähren-Problem, wobei allerdings zum Schließen der Lücken zwischen den aufgereihten Aufliegern Gabelstapler eingesetzt werden können, die mit ihren Gabeln synchron mit der Einschaltung der hinteren Querrolleinrichtung, unter den Querträger der vorderen Stützen greifend, die vordere Querbewegung übernehmen.

Eine solche Gabelstapler-Lösung ist natürlich auch für den Spurweiten-Übergang denkbar. In beiden Fällen kann eine Strapazierung der Auflieger-Reifen vermieden werden.

Außer der Gewichtsökonomie ist auch die Raumökonomie ein Anliegen der gegenwärtigen Erfindung. Es wird gezeigt, daß auch die Mitführung zweier Reservereifen möglich ist und auch dann noch Platz für Gerätschaften verbleibt.

Die Niederflurwagen können in der gegebenen Darstellungsform auch für kleinere und kürzere LKWs benutzt werden, die genauso wie die PKWs durch ein Zickzack-Einparkmanöver in Querrichtung von der Rampe auf das Schienenfahrzeug überführt werden. Dies kann auch ökonomisch sinnvoll sein, wenn es sich um den Transport sehr teurer empfindlicher Instrumente oder Künstwerke handelt.

Diese breite Nutzbarkeit der erfundenen Einrichtung hat deshalb eine große wirtschaftliche Bedeutung, weil das Verschieben von Bahnwaggons zwecks anderer Zusammenstellung und die Belegung von Rangierbahnhöfen mit den großen Waggon-Liegezeiten weitgehend überflüssig werden. Dies wird sich besonders auswirken für die Waggon-Nutzung bei Transit-Engpässen, wie z.B. dem Brennerpaß. Laut VDI-Nachrichten Nr.7 vom 17.2.1989, S.25, fallen pro Tag am Brenner in beiden Richtungen neben dem PKW-Verkehr je 1500 Schwerlastfahrzeuge an. Die Prognose für die Jahrhundertwende geht auf Verdopplung und sogar bis 4500 Fahrzeuge pro 24. Std. Dieses Problem ist zu bewältigen, wenn - wie bei Bergpässen üblich - mit 2 Lokomotiven gefahren wird und hinter den Ankunftsstationen mittels Weichen ein Gleis- und Richtungswechsel erfolgt ohne Rangieren der Lokomotiven.

Werden 2 Rampen für jedes der 2 Gleise vorgesehen, so kann entsprechend geraden und ungeraden Wagennummern das Ausschiffen und Einschiffen nach rechts und links gleichzeitig vorgenommen werden mit nur einem Phasenunterschied, bedingt durch den Richtungswechsel über die Weichen. Dann ist es denkbar, daß alle 10 Minuten in jeder Richtung ein Zug den Paß überquert, also 144 Züge pro Tag in jeder Richtung bei ca. 30 Fahrzeugen pro Zug.

Auch das bisherige Rangieren nach Bestimmungsorten läßt sich durch ein Überführen von einem Gleise zu anderen über zwischen-liegende Rampen ersetzen. Beispiel: Ein Zug mit 30 Aufliegern, wie Fig.11, sei mit Früchten aus Süditalien auf einem "Über führungsbahnhof" im Bereich München eingelaufen. Auf zwei Nachbargleisen für die Richtungen Ost und West stehen je ein Zug mit 30 bereits geleerten Niederflurwagen. Über Unter- oder Überführungen geleitet, fahren je 5 Sattel-Zugmaschinen assoziierter Speditionen nach geraden und ungeraden Waggon-Nummern getrennt auf die westlichen und östlichen Seitenrampen. Mit dem auf Seite 25 im Zusammenhang mit Fig.11 beschriebenen Manöver werden in zwei Aktionen je 10 Auflieger auf die für die westliche und die östliche Richtung bestimmten Züge überführt. Die übrigen 10 Auflieger mit Früchten werden danach auf Großmärkte nach München gefahren. die noch freien Nieder flurwagen können dann in beschriebener Weise von anderen Speditionen mit Waren aus dem Bereich München belegt werden, oder sowohl mit Personenwagen als auch mit Wohnanhängern. Zur Erleichterung der Andockmanöver können die leeren Nieder flurwagen während der Aufenthaltspause auch von den Zugmaschinen und anderen Fahrzeugen zum Überqueren der Schienen benutzt werden, was bei Spezialfahrzeugen mit unterbrochener Flur nicht möglich ist.

Um auf das Problem der Rangierbahnhöfe und die auf diesen erfolgende Neuzusammenstellung von Waggonkombinationen nochmals einzugehen:

mit einem Niederflurwagen nach Fig.13 wäre es möglich, einen Einheits-Niederflurwagen einzuführen, der auch Container auf nehmen kann und im weiteren Verfolgen dieses Gedankens scheint es möglich, daß die Bahn dann mit etwa vier stets zusammengestellten Zügen auskommen könnte: dem Niederflurwagentyp, dem Kesselwagentyp, zwei Personenwagentypen und als Ausnahme Sondertypen.

Fig.1;2;3.1 und 3.2 betreffen die vordere Querrolleinrichtung. Fig.1 zeigt sie im Aufriß, wie sie bei Betrachtung des Aufliegers 2 von vorn erscheint, und zwar in der Blockierstellung auf dem Bahn-Niederflurwagen 4. Fig.2 zeigt die Einrichtung als Grundriß im Schnitt durch die vier Querrollachsen 240 mit je zwei Zwillingsluftreifen 240a. Fig.3.1 und Fig.3.2 in Aufriß und Ansicht von der Schmalseite erläutern das Zusammenwirken der Teleskopbeine 280 in den Teleskophülsen 28 mit den seitlichen Knickstreben 291, 292 in der Querfahrstellung in abgesenkter Stellung und in der Nichtgebrauchsstellung.

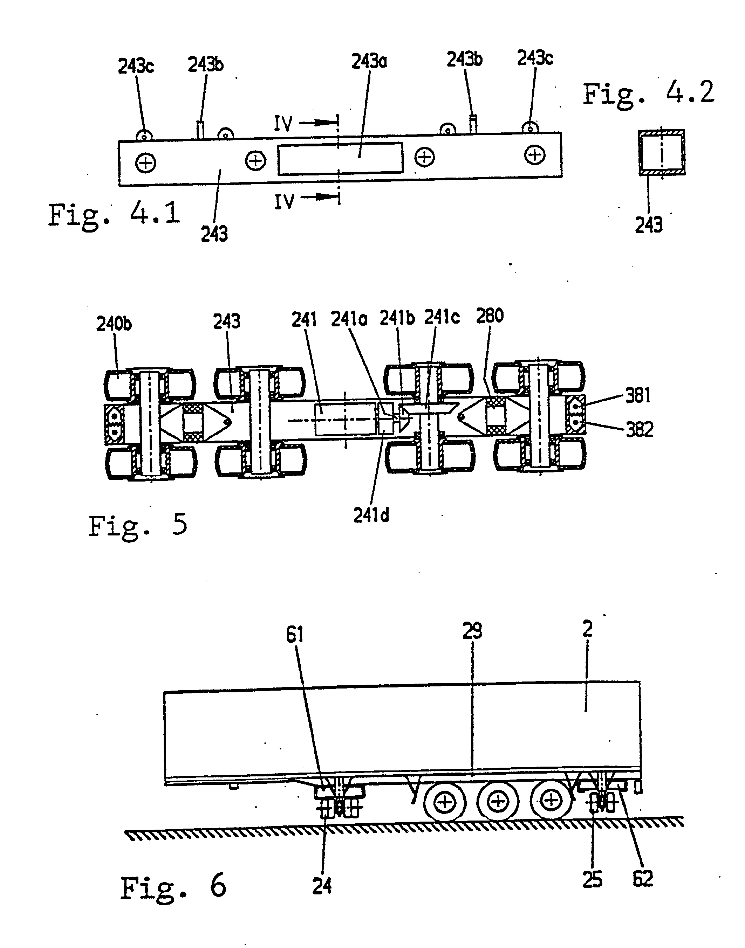

Fig.5 zeigt die leichtere hintere Querrolleinrichtung 25 mit nur acht Luftreifen. Fig.4.1 zeigt den Hauptstahlträger 243 dieser Querrolleinrichtung als Einzelteil in Seitenansicht und Fig.4.2 denselben im Querschnitt.

Fig.6 stellt einen Sattelschlepper-3-Achs-Auflieger 2 in Seitenansicht dar, mit den Querrolleinrichtungen 24 vorn und 25 hinten, zusammen mit den Reservereifen 61 vorn und 62 hinten.

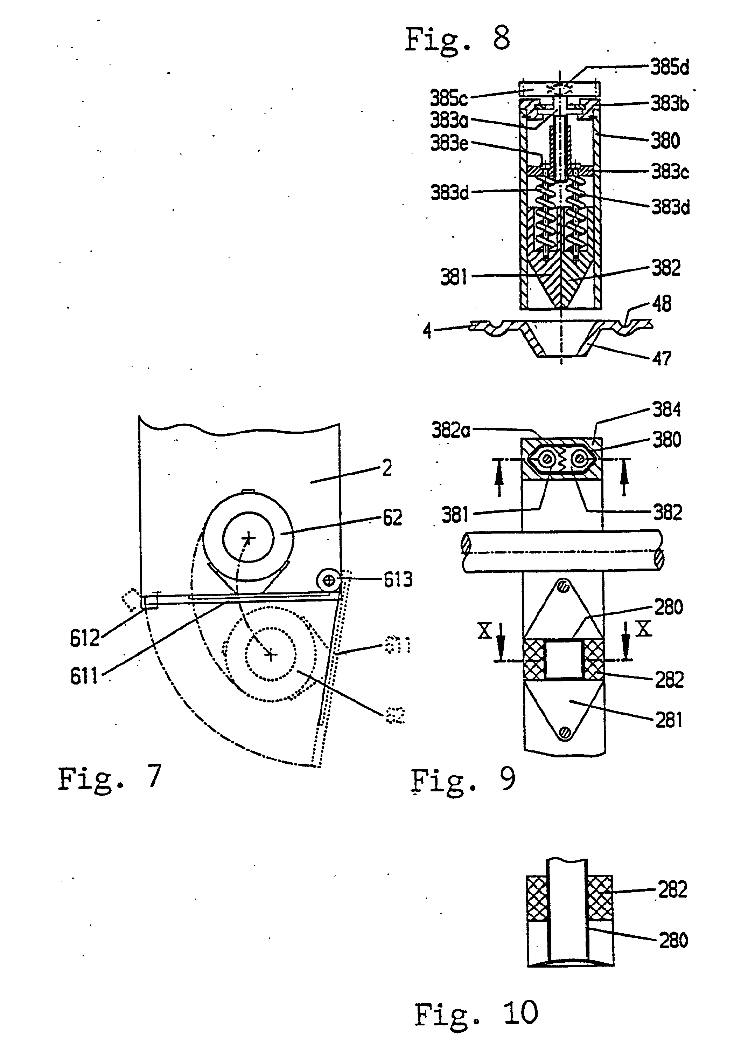

Fig.7 zeigt eine raumsparende Halterung des hinteren Reservereifens 62 in Form einer ausschwenkbaren Schublade, bei der mit 613 das Gelenk, mit 611 die hintere Abschlußplatte mit Nummernschild und Beleuchtung, und mit 612 ein Riegel bezeichnet sind.

Fig.13 ist eine Draufsicht auf die Aufstellfläche eines Niederflurwagens mit einem Gitterrost 04. Letzterer ist in den Fig.12.1 und 12.2 nochmals in vergrößertem Maßstab gezeigt. Im Zusammenwirken mit der in den Fig.16-17.5 erläuterten Blockiereinrichtung 038 anstelle der in Fig.1 gezeigten Blockiereinrichtung 38 erlaubt es dieser Gitterrost ohne ein genaues Überrollmannöver von der Rampe auf den Niederflurwagen trotzdem eine Blockierung vorzunehmen. Die Fig.17.1-17.3 erläutern in drei Aufriß-Schnitten die Funktionsweise dieser Blockiereinrichtung 038. Und zwar zeigt sie die Fig.17.1 im Zustand vor dem Blockieren; Fig.17.2 in einer Übergangsstellung und Fig.17.3 in der Endstellung. Die Fig.16, 17.4 und 17.5 zeigen Details der Einrichtung. Fig.17.4 ist eine Ansicht von unten. Fig.17.5 eine Seitenansicht und Fig.16 ein Einzelteil einer Klammer (oder Klemmvorrichtung) in Draufsicht.

Zunächst Grundsätzliches zur Darstellung der Hilfseinrichtungen:
Bei den beschriebenen Einrichtungen wird davon ausgegangen, möglichst wenig Änderungen an den Zugmaschinen, den wertvollsten Kapitalien, vorzunehmen und notwendige Änderungen und eventuelle Umrüstungen nur an den Aufliegern vorzusehen.

Dem kommt entgegen, daß viele Einzelunternehmen dazu über gegangen sind, nur die Zugmaschinen selbst zu besitzen und zu pflegen, die Auflieger dagegen entsprechend anfallendem Bedarf nach der Zahl und verschiedenen Ausführungsformen von größeren Spzialunternehmen zu leasen.

Da die Zugmaschinen meistens nur mit Strom 24 Volt und Pneumatik ausgerüstet sind, wird bei den beschriebenen Einrichtungen nur von diesen beiden Energieformen ausgegangen. Um die Realisierbarkeit der Querrolleinrichtungen zu beweisen, wird bei der dargestellten Bereifung von handelüblichen Reifen für Gabelstapler ausgegangen, doch ist eine weitere Gewichts-Minimierung denkbar mit Spezialreifen und leichten Spezialfelgen, insbesondere mit speziellen Breitreifen oder walzenförmigen Reifen mit dünner Lauffläche, da es sich nur um geringe und sehr langsame Bewegungen handelt.

Die vordere Querrolleinrichtung der Fig.1 und 2 zeigt die stärkere Bereifung mit acht Zwillingsreifen 240, 240a, weil die Schwerpunktlage des Aufliegers nach übertragung der Lasten von der Zugmaschine und den drei Aufliegerachsen weg auf die Querrolleinrichtungen während des Querrollens, dies verlangen. Das Andockmanöver vollzieht sich in dieser Ausführung in gleicher Weise wie in der DE-PS 37 39 277 beschrieben, allerdings mit dem Unterschied, daß von der in dieser Patentschrift behandelten Möglichkeit des pneumatischen Hochnehmens der Aufliegerachsen und der Gegenbewegung der Teleskopstützen für Lastübernahme Gebrauch gemacht wird, um mit geringeren Auszugshöhen für die Teleskope auszukommen.

Beim Querrollen werden zunächst die Teleskopbeine 280 ausgefahren, bis sie einen Teil der Last übernommen haben. Dann erst werden die Aufliegerachsen hochgefahren. Der Mechanismus der Teleskopbeine ist der für die vorderen Auflieger-Stützen übliche: Das Teleskopbein 280 mit äußerem Vierkant-Querschnitt ist in einer Vierkanthülse 28 geführt und wird als Mutter durch eine Spindel bewegt, die über weitere Getriebeelemente 280c vorzugsweise synchron-elektromotorisch, derart angetrieben wird, daß eine Synchronbewegung aller Teleskopbeine samt den Längsträgern 243 und den damit verbundenen Achsen 241d, den Rädern 240a sowie der Pflockiereinrichtungen und ihrer Antriebe erfolgt.

Als nächstes werden die zwei Synchronmotore 241 beider Querrolleinrichtungen eingeschaltet. Beim Untersetzungsgetriebe ist an ein Oval-Flexo-Zahngetriebe, wie in "Antriebstechnik", März 1989, S.12-15, gedacht, das in einer Stufe eine Untersetzung von 320:1 mit geringsten Reibungsverlusten ermöglicht und deshalb den Einsatz kleiner, leichter Motore mit sehr geringer Drehmoment-Beschleunigung gestattet. Dies ist wiederum wegen der höheren Belastbarkeit leichterer und kleinerer Luftreifen bei einer fast statischen Beanspruchung ein weiterer Gewichtseinspar-Vorteil. Es genügt, wenn die 3-3,5 m lange Strecke in ca. 2-3 Minuten bewältigt wird. Das Ein- und Abschalten der Motore kann mit elektronischer Fernsteuerung erfolgen. Möglich ist auch,das Abschalten zum richtigen Positionieren der Blockiereinrichtung automatisch mittels pneumatischer oder anderer Sensoren vorzunehmen, die dann an Rillen 48 auf der Plattform 4 zusammen mit Löchern 47 ihre Orientierung finden. Wenn das Überwechseln auf die Pattform und das Blockieren stattgefunden haben, werden die drei Achsen des Aufliegers 2 (Fig.6) wieder pneumatisch heruntergenommen, so daß ihre sechs großen Reifen,automatisch in üblicher Weise mit Federkraft festgebremst, einen Großteil der Lasten und der Längs- und Quer-Dynamik während der Bahnfahrt übernehmen.

Zur Versteifung der Teleskopbein-Hülsen 28, die mit den Auflieger-Längsträgern 29 wie üblich verschraubt oder verschweißt sind, dienen,auch wie üblich, Diagonalverstrebungen 28a und 28b, die am unteren Ende in einer Manschette enden, an denen die Kräfte über Knickstreben 280a, 280b auf den Träger 243 weitergeleitet werden. Die Gelenke dieser Knickstreben 280a, 280b sind derart angeordnet, daß die Streben beim Einziehen der Teleskopbeine automatisch einknicken und in Auszugsstellung (Fig.1) auf Zug beansprucht werden. Die Strebe 280b ist mit einer Nase versehen, die sich auf dem Träger 243 abstützt, um das Einknicken der Knickstrebe sicherzustellen. Diese Versteifungen dienen zur Aufnahme der Schlingerbewegungen während der Fahrt.

Ähnlich dienen zwei Knickstreben 291, 292 (Fig.3.1; 3.2) einer Teilübernahme der Kräfte in Längsrichtung des Zuges, die beim Bremsen auftreten. Die Strebe 292 ist an einem Ansatz 243b des Trägers 243 gelenkig befestigt, Fig.3.1 zeigt die Stellung während des Querrollens und während der Bahnfahrt. Fig.3.2 zeigt die Stellung während der Straßen-fahrt. Wie aus Fig.3.1 ersichtlich, werden die symmetrisch angeordneten Streben 291 in dieser Stellung auf Druck beansprucht, während sie in der Stellung der Fig.3.2 auf Zug beansprucht werden und gegen zwei Anschläge liegen, Bei der hier dargestellten Konstruktion ist besonders auf Elastizität, Gelenkigkeit und gute Verteilung der Kräfte über kurze Trägerlängen geachtet, die einige Analogien zur Skilauf-Dynamik aufweist.

Entsprechend den Fig.1 und 2 gehören zu jedem der symmetrisch angeordneten Teleskopbeine 280 zwei benachbarte Achsen mit je zwei Zwillingsreifen. Die Stützkraft von 280 wird über eine durchgewölbte, elastische Feder-Stahlplatte 281 als eine Art Fuß auf den Träger 243 über kurze Stützweiten auf die zwei Achsen (wie 240) und die Reifen übertragen. Wie Fig.4.1 zeigt, ist vorgesehen, den kastenförmigen Stahlträger 243 durch Aussparungen 243a in der Mitte des Trägers eine Verwindbarkeit zu verleihen, so daß die Trägerenden mit ihren, den Stützbeinen benachbarten Rädereinheiten, je ein Fahrgestell vorn und hinten bilden, das sich den Bodenunebenheiten anpassen kann, um eine möglichst gleichmäßige Lastverteilung sicherzustellen. Die Aussparungen sind auch für Gewichtseinsparungen und Montageerleichterungen der Antriebe nützlich. Sie werden mit Kunststoffplatten abgedichtet. Die Teleskopbeine 280 sind oberhalb der Stützfüße über eine Manschette 280c aus elastischem und stoßdämpfendem Werkstoff mit dem Träger 243 stützend verbunden, analog den modernen Skistiefeln mit hohen Kunststoffschäften. Ein gleicher Kunststoffmantel ist für die Einbettung der Führungshülsen 380 vorgesehen, um die Längs- und Quer-Impulse gedämpft aufzufangen.

Die Fig.8 und 9 zeigen im einzelnen eine Ausführungsmöglichkeit des bereits in der DE-PS 37 39 277 offenbarten Blockierens. Dort geschieht dieses Blockieren mittels zweier Keile, die eine seitliche Unsymmetrie auszugleichen vermögen, um so eine weitere Bewegung der Querrolleinrichtungen zu ersparen.

Um das Blockieren schnell durchzuführen, wird in der vorliegenden Erfindung von einem Elektromotor 385 eine Getriebekette mit Spindel 385a, 385b bis zum Zahnrad 385c angetrieben. Weiter geht der Antrieb dann über eine Rutschkupplung 385d auf die Antriebsspindel 383a, die sich im Drehlager 383b abstützt, und welche die in der Hülse 380 geführte vierkantige Gleitmutter 383c zum Blockieren abwärts und zum Lösen aufwärts bewegt.

Diese Bewegungen werden mittels der zwei Spiralfedern 383d auf Druck und über die beiden Stangen 383e auf Zug auf die beiden unabhängig voneinander beweglichen Keile 381, 382 übertragen. Fig.8 zeigt sie in der Stellung, in der sie hochgezogen sind. Die Draufsicht der Fig.9 zeigt ihre gegenseitige Verzahnung zwecks abstützender Führung bei der unsymmetrischen Verkeilung im Loch 47.

Die Federn, die in dieser Lage verschieden zusammengedrückt sind, verhindern auch bei Schienenstößen ein Herausspringen der Keile. Ein Aufschaukeln durch rhythmische Stöße ist außer durch die erwähnte gedämpfte Lagerung der Hülse 380 durch Einfüllen von schwerflüssigem Öl in die Hohlräume der Einrichtung vermeidbar.

Die Symmetriestellung in der Fahrrichtung der Querrolleinrichtung kann neben der Keilwirkung durch kurze elektrische Impulse vor und zurück auf den Motor 241 (Fig.2) erreicht werden.

Eine andere, für Handbedienung bestimmte Blockiereinrichtung ist in den Abbildungen der Fig.16-17.5 dargestellt. Diese Einrichtung ist zur Verwendung mit einem Niederflurwagen 4 mit Gitterrost-Plattform 04 der Fig. 13 vorgesehen. Diese Art Gitterroste sind in den U.S.A. gebräuchlich für Fahrbahnen von Brücken, z.B. über den Hudson in New York. Sie haben den Vorteil, daß Regen sofort abläuft, weder Pfützen noch Eis sich bilden, auch Schnee sich nicht festsetzen kann und somit die Fahrbahn stets griffig bleibt, was dem Haftvermögen aller Reifen zugute kommt, um eine Mehrfachsicherung der aufgefahrenen Fahrzeuge zu bewirken. Ein anderer Vorteil des Gitterrostes in Zusammenhang mit Blockiereinrichtungen der Fig.16-17.5 ist, daß es während des Quer-Hinüberrollens von der Stellung auf der Rampe bis zur Stellung auf dem Bahn-Niederflurwagen keiner Individualsteuerung der Querrolleinrichtungen bedarf. Ist der Auflieger einigermaßen parallel zur Rampenkante bzw. zum Zuge aufgefahren, so genügt ein synchrones (durch Synchronmotore bewirktes) zeitsparendes Querrollen, um in einer Stellung zu stoppen, in der das Blockieren vorgenommen werden kann.

Ein weiterer Vorteil dieser gleichmäßig strukturierten Fläche ist ihre Eignung zum Aufstellen und Befestigen von Fahrzeugen aller Längen und Spurweiten, soweit sie von einer Rampe auf den seitlich eingefahrenen niveaugleichen Niederflurwagen bewegt werden können.

Dies gilt auch für Kurzfahrzeuge, die sich in Geradeausfahrt quer und gegebenenfalls eng nebeneinander auf dem Niederflurwagen aufstellen und befestigen lassen, und die vermutlich eine wichtige Rolle für den Individual-Personentransport mit Gepäck von einer City zur anderen spielen werden.

Der Hauptgedanke bei der zum Gitterrost vorgeschlagenen Blockiervorrichtung ist, daß neben der Grobverbindung, z.B. mittels der Zapfen 0382a in Löcher 04, eine feinbewegliche Kupplung z.B. mittels einer in Form eines gekreuzten Pyramidenrasters ausgebildeten Feinverzahnung 0382d, vorgesehen ist, bei der sich zusätzlich ihre Winkellage mittels einer Drehlagerung der Kupplung am Teil 0381 korrigieren läßt.

Die Stellung der Fig.17.1 ist zunächst die Stellung der Blockiereinrichtung nach dem Hinüberrollen von der Rampe auf den Niederflurwagen. Die fünf Zapfen 0382a mit quadratischem Querschnitt, die in Fig.17.1 im Aufriß und in Fig.17.4 als Ansicht von unten gezeigt sind, befinden sich noch oberhalb der Löcher 04 des Gitterrostes. In ähnlicher Weise wie bei der vorher im Zusammenhang mit Fig.8 beschriebenen Blokkiereinrichtung, jedoch mittels Handkurbel 0385b, werden über die Spindel 0383b mit Spindelmutter 0383c, Hülse 0383e, die die Rolle der Zugstangen 383e und die eine Feder 0383d, die die Rolle der zwei Federn 383d übernimmt, die Zapfen nach unten bewegt, bis der mittlere Zapfen 0382a, der etwas länger ist als die anderen, knapp über einem der Löcher steht. Bis zu diesem Augenblick werden die beiden Kupplungsteile 0381, 0382 mittels einer Klammer, bestehend aus der Federstahl-Gabel 0381a, 0381b sowie der Welle 0381c mit zwei Nocken 0381e, zu denen ein Betätigungsgriff 0381d gehört, zusammengehalten. Fig.17.5 zeigt in Seitenansicht (Aufriß) die Klammerstellung. Der Griff 0381d ist senkrecht gestellt, die Nocken 0381e sind in Obertotpunkt-Stellung. In Fig.17.2 ist dann die Stellung gezeigt, in der die Klammer gelöst wird. Der Griff 0381d ist in Horizontalstellung geschwenkt. Damit sind auch die beiden symmetrischen Nocken 0381e, die auf die symmetrischen Gabelenden 0381a, 0381b drücken, aus ihrer Klemmstellung geschwenkt. Das Kupplungsteil 0382, das noch lose in der Klammer hängt, kann nun mittels des Griffes 0382b derart dirigiert werden, daß zunächst der etwas längere mittlere Zapfen 0382a sich in ein Loch des Gitterrostes 04 einfädelt. Danach fädeln sich die übrigen vier Zapfen, gegebenenfalls mittels einer leichten Verdrehung, in weitere Löcher ein.

Während eine Hand den Griff 0382b dirigiert, kann die andere Hand mittels der Kurbel 0385b die Eintauchbewegung der Zapfen bewirken. Dann wird mit der rechten Hand Griff 0381d gefaßt und durch horizontale Winkeldrehung die Platte 0381, die über die Klammer mit dem Griff verbunden ist, in Parallellage zur Gegenplatte 0382 gebracht. Danach kann die Klammer wieder geschlossen werden. Griff 0381d steht wieder senkrecht (siehe Fig.17.3). In dieser Endstellung ist die Spiralfeder 0383d am stärksten gespannt. Diese federnde Spannung verhindert ein Herausspringen der Zapfen 0382a aus den Löchern 04. Ein an sich mögliches Bajonettieren der Zapfen erübrigt sich. Gegen Aufschaukeln von Schwingungen kann, wie bei der vorher besprochenen Blockiervorrichtung, neben der Einlagerung von Hülse 0380 in 243 über eine stoßdämpfende Manschette 0384 auch eine Füllung der unteren Hohlräume mit schwerflüssigem Öl dienen, mit Kommunikation zu den oberen Hohlräumen, so daß ein Stoßdämpfereffekt entsteht.

Das Pyramidenraster 0382d wird mit seinem Gegenstück, in jeder Lage passend, zum Schließen gebracht werden können, wenn seine halbe Rasterperiode kleiner ist als das Spiel der Zapfen 0382a im Gitterrost 04.

Fig.14 und 15 betreffen eine Ausführungsform, bei der Luftreifen an den Enden der Querrolleinrichtung und Metallwalzen 0240 mit Hartgummiüberzug an den mittleren Achsen miteinander kombiniert sind. Der nicht näher dargestellte motorische Antrieb zum Querrollen ist für die Achsen mit Zwillingsluftreifen 240a gedacht bzw. mit Einfachreifen bei einer Ausführung wie in Fig.6 gezeigt, bei der entsprechend der Lastverteilung hinten auf Zwillingsreifen verzichtet werden kann.

Die Walzen 0240, wie üblich für Maschinentransporteinrichtungen mit Wälzlagern versehen, sind je zu vier Stück zu einer Geländeanpassungseinheit zusammengefaßt. Diese Einheiten bestehen aus je einer unteren Stahlblechschale 0240b und einer oberen Stahlblechschale 0240a, in denen die Wälzlager eingebettet sind.

7

Die auf dem Träger 243 ruhende Last wird auf die obere Schale 0240a auf dreierlei Weise übertragen: über eine Kugelkalotte 0240c hart, federnd über zwei Befestigungsenden 0240e der oberen Schale 0240a und elastisch über elastische Zwischenlagen 0240d. Dadurch ist es möglich, daß diese vier Walzeneinheiten sich kippend den Bodenneigungen etwas anpassen können.

Die bereits kurz behandelte Verfahrens- und Einrichtungsvariante nach Fig.11 mit dem Andockmanöver mit Hilfe der Zugmaschine wird vorteilhafterweise zusammen mit der Gitterrostplattform des Niederflurwagens 4 der Fig.12.1, 12.2 und den Blockiereinrichtungen entsprechend den Fig. 16-17.5 verwendet, da hierbei keine identischen Antriebseinheiten für das Querrollen eingesetzt werden und man mit einer weniger präzisen Endlage auf der Aufstellfläche des Niederflurwagens rechnen muß. Die in Fig.11 gezeigte stärkere Bereifung der Querrollvorrichtung 25a am Auflieger hinten ist dadurch bedingt, daß während des Manövers nun der vordere Stützpunkt gegenüber dem Masseschwerpunkt des Aufliegers weiter hinaus nach vorn zum Kronzapfen der Zugmaschine verlegt ist und damit die vordere Hebellänge vergrößert wird. Hierdurch entsteht eine Gewichtsverlagerung nach hinten, der durch vier Achsen und acht Zwillingsreifen Rechnung getragen werden muß.

Neben der reinen Luftbereifung ist bei entsprechenden Bodenverhältnissen auch hier eine kombinierte Bereifung wie in Fig.14, 15 möglich.

Die vordere Stütze 28 muß stabiler versteift sein als bei der üblichen alleinigen Verwendung auf ruhendem Boden. Im Prinzip stimmt diese Versteifung mit der in den Fig.1, 2, 3.1 und 3.2 beschriebenen Art überein. Da aber keine Räder und Achsen gelagert werden müssen, kann der Längsträger kompakter und leichter ausgeführt werden, wie mit dem Teil 0243 in den Fig.18, 18.1 und 18.2 dargestellt. Die Teleskophülse 028 kann entsprechend länger ausgeführt und damit die freie Länge des Teleskopbeines verringert werden. Der Längsträger 0243 stützt sich unterhalb der beiden Teleskopbeine mittels zweier elastischer Zwischenglieder 0281 auf den Boden oder dem Gitterrost 04 auf. Diese Zwischenglieder bestehen aus je drei Stahlrohrwalzen, die in einer Art Stahlmanschette eingelagert sind, wobei die Hohlräume mit Elastopor ausgefüllt werden. Diese Stahlmanschetten sind an den oberen Enden mit dem Längsträger verbunden. Sie dienen einer Druckverteilung auf dem Gitterrost und übernehmen gleichzeitig die Rolle der an Auflieger-Stützen oft verwendeten Rollen, nämlich einen Spannungsausgleich in Längsrichtung des Aufliegers zu ermöglichen.

Für das Andockmanöver der Ausführungsform gemäß Fig.11 gibt es drei Möglichkeiten. Hiervon sind zwei bereits im Prinzip in der DE-PS 37 39 277 beschrieben, nämlich diese Manöver mit angekoppelter Zugmaschine in 90°-Stellung bei Rückwärtsfahrt vorzunehmen oder, bei Vorhandensein von Rampen beiderseits des Zuges, auch in Vorwärtsfahrt. Zusätzlich wird gemäß der Erfindung noch vorgeschlagen: Das Sattelschlepper-Gespann fährt in Vorwärtsfahrt parallel zur Rampenkante an. Fährt nun der Zug ein und ist eine Korrektur der Stellung des Sattelschleppers parallel zum Niederflurwagen notwendig, so geschieht dies mit der Zugmaschine in Geradeausfahrt. Dann wird die Kronzapfen-Verriegelung gelöst, die vordere Stütze 2431 wird ausgefahren und dann die Zugmaschine 1 alleine so rangiert, daß sie rückwärts in 90°-Stellung wieder auf den Kronzapfen trifft. Dann erfolgt wieder die Verriegelung, und während die Stütze 2431 soweit hochgezogen wird, daß sie vom Boden freikommt, wird die hintere Querrolleinrichtung 25a heruntergelassen. Nachdem die drei Auflieger-Achsen pneumatisch hochgefahren wurden, kann das synchrone Querrollen der Zugmaschine und der Querrolleinrichtung 25a erfolgen. In der Endstellung werden dann die Stützen 2431 ausgefahren und es erfolgt das Blockieren auf dem Rost 04 des Niederflurwagens 4, wie bereits beschrieben. Die drei Aufliegerachsen werden wieder heruntergefahren, die Zugmaschine entfernt sich. Sollte sich herausstellen, daß auch bei einem längeren Zug die einzelnen Niederflurwagen mit ausreichender Genauigkeit an markierten Stellen der Rampe positioniert werden können, so wäre auch das Rangieren der Zugmaschine vor Einfahren des Zuges möglich und damit eine zeitliche Abkürzung des Verfahrens. Das Rangieren zum Erreichen der 90°-Stellung mit der Zugmaschine allein hätte den Vorteil, daß eine geringere Rampenbreite benötigt wird.

Um zu demonstrieren, daß im Gegensatz zu den bekannten Bahntransporteinheiten für Sattelschlepper der hier vorgeschlagene Niederflurwagen mit einer Transportplattform, die entsprechend Fig.13 als Gitterrost ausgebildet ist, eine universelle Anwendung zuläßt, ist in Fig.19 eine Ausführung von Hemmschuhen gezeigt, die eine dem Gitterrost angepaßte gute Blockiermöglichkeit für verschiedenartige Fahrzeuge zulassen. Die Hemmschuhe 0581 und der zweiteilige verstellbare Hemmschuh 0582, 05821 sind mit mehreren Vierkantzapfen 0581a und 05821a versehen, die in Löcher des Gitterrostes passen. Während an den Zapfenenden Vierkantscheiben aufgeschweißt sind, ist der Hals dünner gehalten, so daß sich die Zapfen einfädeln lassen, sich aber unter dem Rost in der Richtung verhaken, in der der Druck der eingekeilten Räder wirkt. Der untere Hemmschuh-Teil 05821 besitzt einen festen Gewindezapfen 05821b, auf dem eine Mutter 05822 aufgeschraubt ist, mit der die beiden Hemmschuh-Teile 0582 und 05821 zusammengeschraubt werden können. Die Mutter 05822 ist durch eine Federrastscheibe 05822a gesichert.

Die stets mitgeführten stabilen Querrolleinheiten am hinteren Ende des Sattelschleppers haben übrigens den zusätzlichen Vorteil, daß bei Auffahrunfällen von PKW's ein Unterrollen derselben verhindert wird.

**Patentansprüche**

**1.)** Einrichtung für ein Kombinationssystem des Straßen-Individualtransportes und des schienengebundenen Zugtransportes mit einem in Selbstbedienung und mit eigenen Mitteln vollziehbaren seitlichen niveauausgleichenden Überwechseln von der einen Transportart zur anderen mittels eines kombinierbaren Transportsystems. das sowohl die Beförderung von Großlasttransportern als auch von Straßenfahrzeugen für den Personentransport zuläßt und im wesentlichen folgende System-Einheiten aufweist:

einen Bahn-Niederflurwagen mit universell für verschiedene Fahrzeuge bis einschließlich 3-Achs-Sattelschlepperlieger verwendbarer ebenen Aufstellfläche mit pflegeleichten, zur universellen Selbstbedienung geeigneten, sich unterhalb der Aufstellfläche befindlichen und für verschiedene Fahrzeuglängen und Spurweiten verwendbaren Befestigungsvorkehrungen, die z.B. aus in der Aufstellfläche angeordneten Löchern bestehen,

mindestens eine mit dem Niederflurwagen niveaugleiche Rampe mit durchgängig ebener universell benutzbarer Fahrbahn zum Längsfahren und zum Querrollen des Straßenfahrzeuges,

Sattelschlepper-Auflieger, der eine stets verfügbare Querrolleinrichtung mit sich führt und nach dem von der Zugmaschine unterstützten Querrollen und der mit eigenen Mitteln erfolgten Blockierung auf dem Niederflurwagen allein transportiert wird,

dadurch gekennzeichnet, daß der Auflieger (2) mit mindestens einer stets mitgeführten Baueinheit versehen ist, welche die folgenden drei Elemente in sich vereinigt:

eine Querrolleinrichtung (24; 25), Teleskopbodenstützen (28; 280) und Blockiereinrichtungen (381; 382; 0382a).

**2.)** Einrichtung nach Anspruch 1, dadurch gekennzeichnet, daß die drei Elemente über einen gemeinsamen Träger (243) in der Höhe verstellbar miteinander verbunden sind.

**3.)** Einrichtung nach den Ansprüchen 1 und 2, dadurch gekennzeichnet, daß mindestens oberhalb einer Querrolleinrichtung (25) ein Raum für die Halterung eines Reservereifens (62) vorgesehen ist, (Fig.6)

**4.)** Einrichtung nach Anspruch 3, dadurch gekennzeichnet, daß die Halterung des Reservereifens (62) am rückwärtigen Ende des Aufliegers (2) aus einer ausschwenkbaren Schublade (611) besteht, deren Außenseite das rückwärtige Nummernschild trägt. (Fig.7)

**5.)** Einrichtung nach Anspruch 3, dadurch gekennzeichnet, daß bei zwei mitgeführten Querrolleinrichtungen (24; 25) eine zweite ähnliche Reserveradhalterung vorgesehen ist, die bei abgekoppelter Zugmaschine und abgesenkter Querrolleinrichtung zugänglich ist.

**6.)** Einrichtung nach Anspruch 1, dadurch gekennzeichnet, daß bei mindestens vier Achsen (240) pro Querrolleinrichtung an der vorderen und der hinteren Achse mindestens je zwei Luftreifen (240a) angeordnet sind.

**7.)** Einrichtung nach den Ansprüchen 1 und 6, dadurch gekennzeichnet, daß bei Verwendung von mehreren Achsen (240) pro Querrolleinrichtung die vordere und hintere Achse mit Luftreifen bestückt sind, während die mittleren Achsen mit Stahlwalzen (0240) versehen sind. (Fig.15)

**8.)** Einrichtung nach Anspruch 1, dadurch gekennzeichnet, daß am Auflieger (2) zwei Querrolleinrichtungen (24;25) vorgesehen sind, von denen die hintere Querrolleinrichtung (25) etwa die halbe Tragkraft und die halbe Räderbestückung der vorderen Querrolleinrichtung (24) aufweist.

**9.)** Einrichtung nach Anspruch 8, dadurch gekennzeichnet, daß die beiden Querrolleinrichtungen (24; 25) über ein Synchronantriebssystem zum gemeinsamen Querrollen angetrieben werden.

**10.)** Einrichtung nach den Ansprüchen 1-9, dadurch gekennzeichnet, daß alle Teleskopstützen (28) über Synchronantriebe (280c) gleichmäßig aus- und eingefahren werden.

**11.)** Einrichtung nach den Ansprüchen 1 und 10, dadurch gekennzeichnet, daß die ausziehbaren Beine (280) der Teleskopstützen (28) sowohl in Längsrichtung als auch in Querrichtung des Aufliegers (2) durch symmetrisch zu den Teleskopbeinen angeordnete Knickstreben (280a; 280b; 291; 292) abgestützt sind, die in der Auszugsstellung auf Zug beansprucht werden und beim Einziehen der Beine selbsttätig einknicken. (Fig.1; Fig.3.1; Fig.3.2)

**12.)** Einrichtung nach den Ansprüchen 1 und 11, dadurch gekennzeichnet, daß die Knickstreben (280a; 280b) an dem Längsträger (243; 0243) angelenkt sind, der die Teleskopbeine (280), die Blockiereinrichtungen (38; 038) und die bodenkontaktierenden Elemente (= Achsen 241d; Reifen 240a; Bodenstützten 0243a) formschlüssig miteinander verbindet.

**13.)** Einrichtung nach Anspruch 1, dadurch gekennzeichnet, daß die Blockiereinrichtungen (38) in an sich bekannter Weise mit zwei unsymmetrisch in Löcher der Aufstellfläche der Niederflurwagen (4) einschiebbaren Keilen (381; 382) versehen sind, wobei jeder Keil in der Blockierstellung mit einer Feder (383d) belastet ist, die ihn unabhängig von dem anderen Keil in das Blockierloch drückt.

**14.)** Einrichtung nach den Ansprüchen 12 und 13, dadurch gekennzeichnet, daß die Keile (381; 382) elektromotorisch über eine Rutschkupplung (385d) und Antriebsspindeln (383a; 383b) oder manuell über eine Kurbel, Schneckenrad und Spindel auf und nieder bewegt werden und Mittel (Zugstangen 383c; 383e) vorgesehen sind, um die Blockierung wieder zu lösen.

**15.)** Einrichtung nach Anspruch 1, gekennzeichnet durch das Zusammenwirken von mehreren Zapfen (0382a) der Blockiereinrichtung mit einer Niederflurwagen-Aufstellfläche, die durch einen weitgehend gleichmäßigen Gitterrost (04) gebildet ist.

**16.)** Einrichtung nach Anspurch 1, gekennzeichnet durch die Kombination einer Grobverbindung mittels in Löcher (04) der Aufstellfläche des Niederflurwagens (4) eingreifenden Zapfen (0382a) und einer feinbeweglichen Kupplung mit den Teilen (0381; 0382), die z.B. mit einer Feinverzahnung (0382d) versehen ist.

**17.)** Einrichtung nach Anspruch 16, dadurch gekennzeichnet, daß einer der Zapfen (0382a) länger ist als die übrigen und beim Eintauchen in die Löcher des Rostes eine Einfädelfunktion übernimmt.

**18.)** Einrichtung nach den Ansprüchen 16 und 17, dadurch gekennzeichnet, daß die Zapfen (0382a) an einer Platte (0382) angebracht sind, die über eine formschlüssige, lösbare Kupplung (= Platten 0381; 0382) mit den sich auf und nieder bewegenden Teilen der Blockiereinrichtung verbunden sind.

**19.)** Einrichtung nach den Ansprüchen 16-18, dadurch gekennzeichnet, daß die Kupplung durch eine Klammer (0381a; 0381b) aufrecht erhalten wird, die durch einen Hebel mit Exzenternocken (0381c; 0381d; 0381e) von der Klemmstellung in die Entkupplungsstellung gebracht wird, und daß an der Platte (0382) ein Griff (0382b) angebracht ist, mit dem die Platte (0382) mit ihren Zapfen (0382a) in die Entkupplungsstellung schwenkbar ist.

**20.)** Einrichtung nach den Ansprüchen 17 und 18, dadurch gekennzeichnet, daß der Formschluß aus einem an beiden Platten (0381; 0382) angebrachten komplementären Pyramidenraster (0382c) besteht, dessen halbe Rasterperiode vorzugsweise kleiner ist als das Spiel der Zapfen (0382a) in den Löchern des Rostes (04).

**21.)** Einrichtung nach Anspruch 16, dadurch gekennzeichnet, daß die Kupplungsteile (0381; 0382; 0382a) während des Bahntransportes mittels einer Spiralfeder (0383d) mit den Löchern des Rostes (04) in einem Eintauch-Kontakt gehalten werden. (Fig.17.1 und 17.3)

**22.)** Einrichtung nach Anspruch 1, dadurch gekennzeichnet, daß an dem Auflieger nur eine Querrolleinrichtung (25a) angeordnet ist und das Querrollmanöver mittels der an dem Kronzapfen des Aufliegers angekoppelten Zugmaschine (1) erfolgt, die nach übernahme der Last durch die Stütze (28) wieder anderen Bestimmungen zugeführt wird. (Fig.11)

**23.)** Einrichtung nach den Ansprüche 1 und 22, dadurch gekennzeichnet, daß die Stütze (28) durch weitere Streben für den Bahntransport sowohl in Fahrtrichtung als auch in Querrichtung verstärkt ist, und daß die an sich bekannte Verbindung von Stützen und Blockiereinrichtungen mittels eines die rechte und die linke Seite verbindenenden Längsträgers (0243) erfolgt. (Fig.18.1-18.3)

EP 0 447 574 A1

# Fig. 1

# Fig. 2

Fig. 3.1

Fig. 3.2

11

Fig. 4.1  Fig. 4.2

Fig. 5

Fig. 6

Fig. 8

385c 385d 383b 380 383c 383d 382 48 47 4 383a 383e 383d 381

Fig. 7

2 62 613 611 82 612 611

Fig. 9

382a 384 380 382 381 X X 280 282 281

Fig. 10

282 280

EP 0 447 574 A1

1

11

2   35  75  753

25a

Fig. 12.1

Fig. 12.2

44   4   38  28  2431

25a   45

Fig. 11

04

Fig. 13

Fig. 14

Fig. 15

Fig. 17.4

0381c
0381b
0382b
0381d
0381e

0381a 0382 0381
243 0382a

Fig. 16

0381a
0381b

0381d
0381b
0381e
0381a
0382a

Fig. 17.5

038
0385b
0383b
0383e
0383c
243
0380
0383d
0381d
0381e
0381
0382
0382b
0382a
0382d
04

Fig. 17.1

0381e
0382b
04

Fig. 17.2

0384

Fig. 17.3

Fig. 18

2

29
028
028a
028b

280a

280b

038

0281b   0243        280   281c   04

0382

Fig. 18.2

0243

280

0291        0292

04                                   29

0281a

0281

0281b

Fig. 18.1

EP 0 447 574 A1

Fig. 19

**Europäisches Patentamt**

# EUROPÄISCHER RECHERCHENBERICHT

Nummer der Anmeldung

EP    90 10 5062

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0316628 (L. LEITZ)<br>* Spalte 7, Zeile 45 - Spalte 9, Zeile 25; Figuren 3, 5, 6, 9 * | 1 | B61D47/00<br>B60S9/14 |
| A | | 13-15 | |
| D | & DE-A-3739277 | | |
| | ---- | | |
| Y | FR-A-2056077 (G. MARIAGE)<br>* Ansprüche 1-4; Figuren 1-10 * | 1 | |
| | ---- | | |
| A | DE-A-3425698 (O. BUTTER)<br>* Seite 7, Zeile 1 - Seite 8, Zeile 14; Figuren 1-6 * | 1 | |
| | ---- | | |
| A | CH-A-384378 (K. WINKLER)<br>* Seite 4, Zeile 47 - Seite 4, Zeile 62 *<br>* Anspruch 1; Figuren 1-3 * | 1<br><br>1 | |
| | ---- | | |
| A | DE-A-3326809 (SEVAR ENTSORGUNGSANLAGEN GMBH)<br>* Ansprüche 1-3; Figuren 1-3 * | 1 | |
| | ----- | | |

**RECHERCHIERTE SACHGEBIETE (Int. Cl.5)**

B61D
B62D
B60S
B65G
B61B
B60P

Der vorliegende Recherchenbericht wurde für alle Patentansprüche erstellt

| Recherchenort | Abschlußdatum der Recherche | Prüfer |
|---|---|---|
| DEN HAAG | 14 NOVEMBER 1990 | CHLOSTA P. |